# EUROPEAN PATENT APPLICATION

(11) **EP 4 800 821 A1**
(43) Date of publication of application: **02.09.2026**
(21) Application number: 24882118.3
(22) Date of filing: 02.10.2024
(51) Int. Cl.: H01M 50/204, H01M 10/48, H01M 50/159, H01M 50/209, H01M 50/276, H01M 50/284, H01M 50/505, H01M 50/51

(54) **BATTERY PACK**

(30) Priority: 24.10.2023 JP 2023182173
(71) Applicant: Vehicle Energy Japan Inc., Hitachinaka-shi, Ibaraki 312-8505 (JP)
(72) Inventor: AIZAWA, Yasuyuki, Hitachinaka-shi, Ibaraki 312-8505 (JP)
(74) Representative: Strehl & Partner mbB
(86) International application number: PCT/JP2024/035263
(87) International publication number: WO 2025/089001

(57) **Abstract**

There is achieved a configuration that quickly measures a temperature of each unit cell in a battery pack in which a plurality of unit cells are aligned.

In a battery pack in which a plurality of unit cells each containing a power generation element in a container and sealed with a lid 501 made of a metal are aligned, a heat transfer member 20 is bonded to the lid 501, an insulation layer 21 including a first wiring is bonded onto the heat transfer member 20, and a temperature detection sensor (thermistor) 30 is connected to the first wiring.

## Description

### Technical Field

The present invention relates to temperature measurement of each unit cell in a battery pack in which a plurality of unit cells are disposed.

### Background Art

A battery pack (also referred to as a battery module) includes blocks formed by stacking a plurality of unit cells, bus bars that connect the unit cells to each other, and the like. The battery pack monitors a state of a battery by a Battery Management System (hereinafter, also referred to as a BMS). The BMS controls each unit cell while determining an allowable output from voltage and temperature states. A thermal resistance and a heat capacity of a temperature measurement unit have a significant influence on more accurate measurement of the state of a unit cell.

Patent Literature 1 to 4 describe a method for measuring the temperature of a battery pack, a circuit board for data processing that is mounted on the battery pack, a flexible printed wiring board, wiring configurations thereof, a structure of a temperature sensor, and the like.

### Citation List

### Patent Literature

Patent Literature 1: WO 2021/020079 A1
Patent Literature 2: Japanese Patent No. 06451650
Patent Literature 3: Japanese Patent Application Publication No. 2013-105522
Patent Literature 4: Japanese Patent Application Publication No. 2011-227000

### Summary of Invention

### Technical Problem

It is desirable to install a temperature detection structure suitable for the number of constituent unit cells at an arbitrary place in a battery pack. On the other hand, since it is necessary to dispose parts constituting the battery pack per unit cell, if the temperature detection structure is additionally disposed per battery, wirings become complicated. Furthermore, it is necessary to consider a space for disposing a temperature sensor, a thermal resistance between the temperature sensor and a measurement portion, the heat capacity of the structure for disposing the temperature sensor, and the like. Conventional configurations have room for improvement in quickly and accurately measuring the temperature at necessary portions in each unit cell.

### Solution to Problem

The present invention solves the above-described problem, and specific means is as follows.
(1) In a battery pack in which a plurality of unit cells each containing a power generation element in a container and sealed with a lid made of a metal are aligned, a heat transfer member is bonded to the lid, an insulation layer including a first wiring is bonded onto the battery pack, and a temperature detection element is connected to the first wiring.
(2) The battery pack described in (1) includes a bus bar that connects a positive electrode of a first unit cell and a negative electrode of a second unit cell,
   a second heat transfer member is bonded to the bus bar, a second insulation layer including a second wiring is bonded onto the second heat transfer member, and a second temperature detection element is connected to the second wiring.
(3) In a battery pack in which a plurality of unit cells each containing a power generation element in a container and sealed with a lid made of a metal are aligned, a heat transfer member is bonded to the lid, an insulation layer including a first wiring is bonded onto the heat transfer member, and a temperature detection element is connected to the first wiring, and the first wiring is connected with a flexible printed wiring board.
(4) In a battery pack in which a plurality of unit cells each containing a power generation element in a container and sealed with a lid made of a metal are aligned, a heat transfer member is bonded to the lid, a flexible printed wiring board including a first insulation layer and a first circuit is bonded onto the heat transfer member, and a temperature detection element is connected with the first circuit at a position at which the temperature detection element overlaps the heat transfer member in plan view.

### Advantageous Effects of Invention

According to the present invention, it is possible to reduce a thermal resistance between a measurement portion and the temperature sensor, and consequently it is possible to quickly measure the temperature. Alternatively, according to the present invention, it is possible to reduce the heat capacity of the temperature detection structure including the temperature sensor, and consequently it is possible to quickly measure the temperature. Alternatively, it is possible to miniaturize the temperature detection structure, and consequently it is possible to install the temperature sensor per unit cell, so that it is possible to accurately measure the temperature. As a result, it is possible to control the temperature, and achieve a long operational life of a battery. Brief Description of Drawings

[Fig. 1]

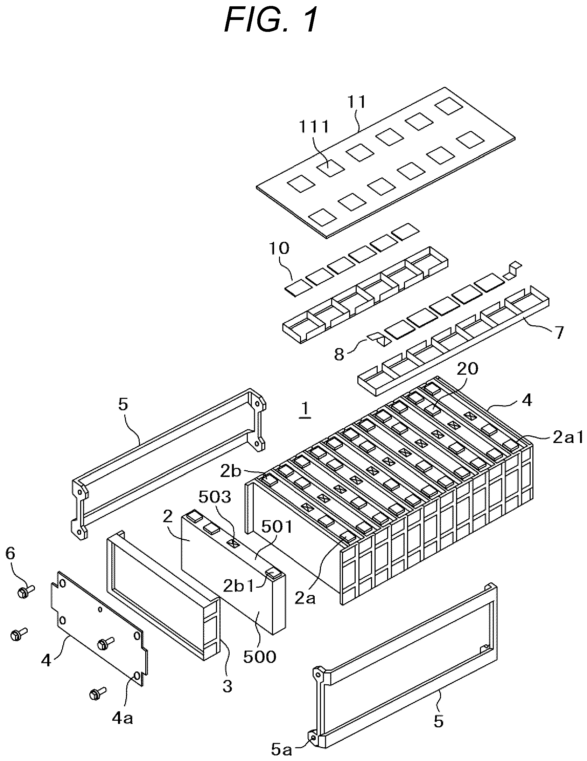

   Fig. 1 is an exploded perspective view of a battery pack according to the present invention.
[Fig. 2]

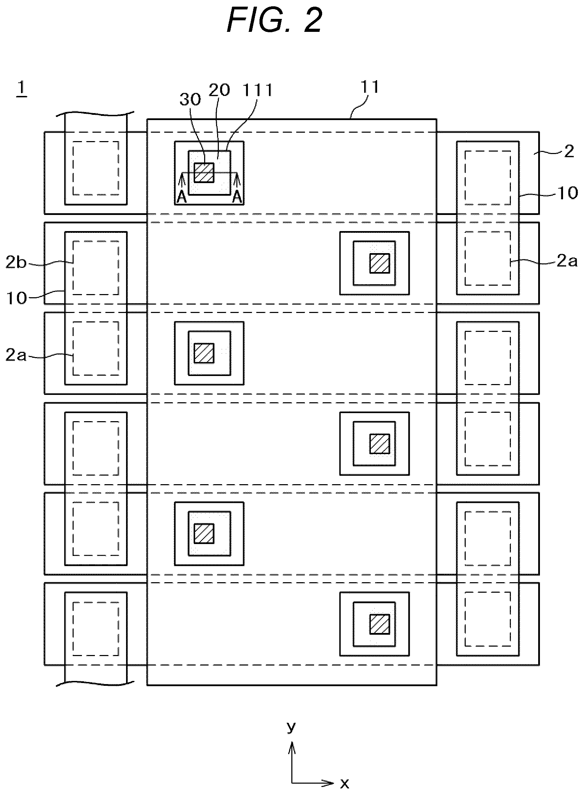

   Fig. 2 is a plan view according to Embodiment 1.
[Fig. 3]

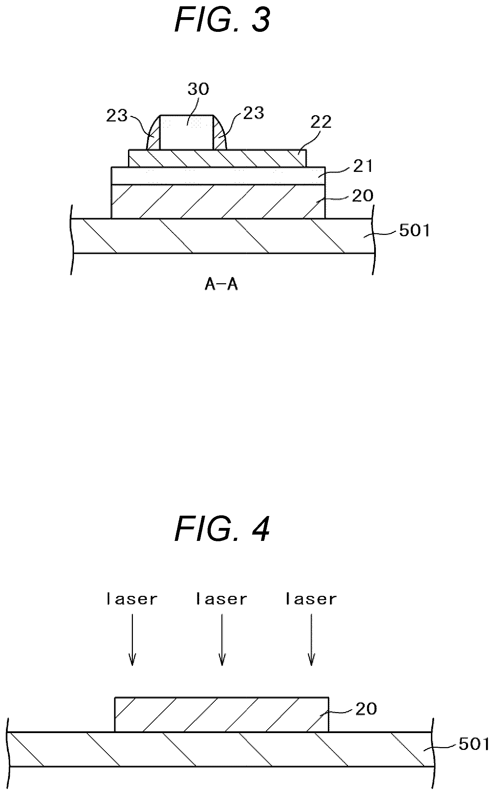

   Fig. 3 is a cross-sectional view taken along A-A in Fig. 2.
[Fig. 4]
   Fig. 4 is a cross-sectional view illustrating an example where a heat transfer member is bonded to a lid of a battery.
[Fig. 5]

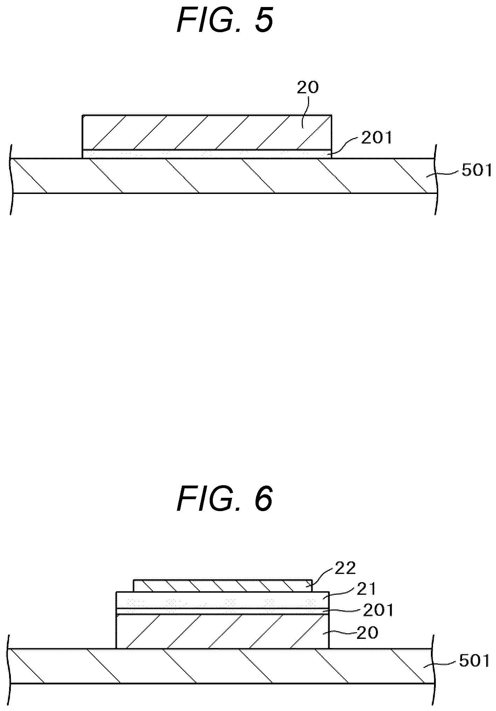

   Fig. 5 is a cross-sectional view illustrating another example where the heat transfer member is bonded to the lid of the battery.
[Fig. 6]
   Fig. 6 is a cross-sectional view illustrating an example where an insulation layer including a temperature detection circuit is bonded onto the heat transfer member.
[Fig. 7]

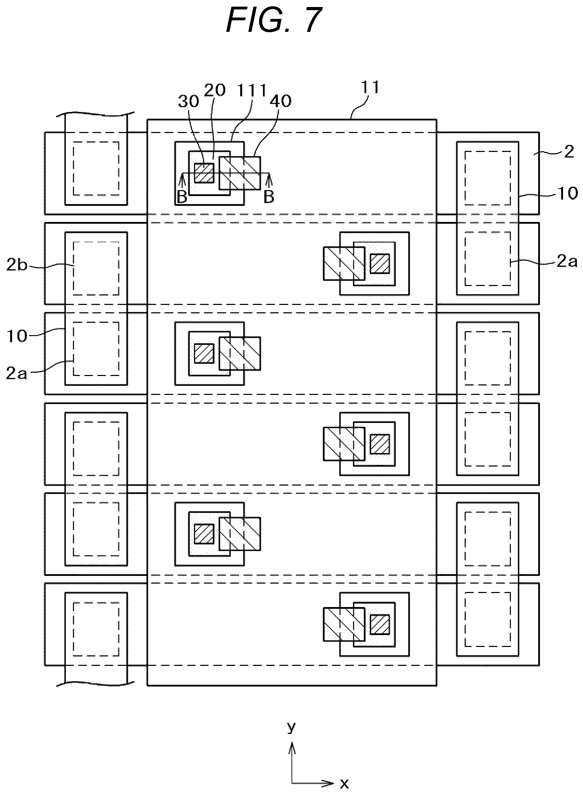

   Fig. 7 is a plan view illustrating a method for connecting the temperature detection structure and a Printed Circuit Board (PCB board) according to Embodiment 1.
[Fig. 8]

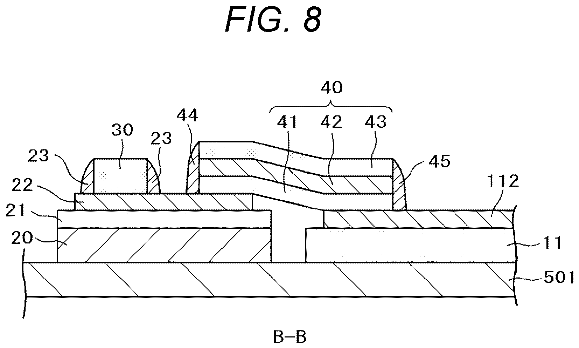

   Fig. 8 is a cross-sectional view taken along B-B in Fig. 7.
[Fig. 9]

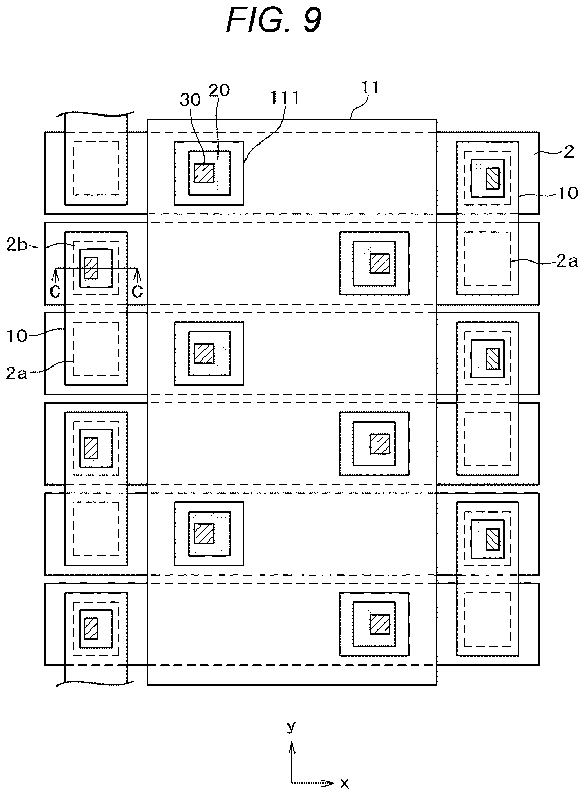

   Fig. 9 is a plan view according to Embodiment 2.
[Fig. 10]

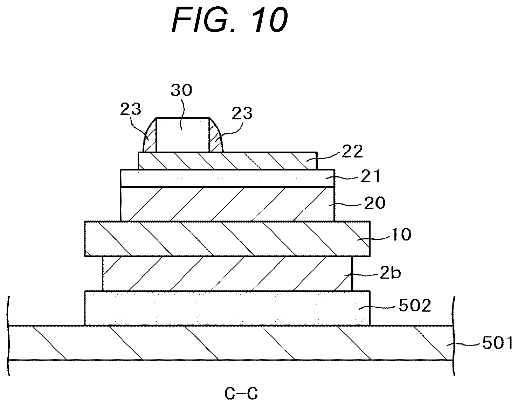

   Fig. 10 is a cross-sectional view taken along C-C in Fig. 9.
[Fig. 11]

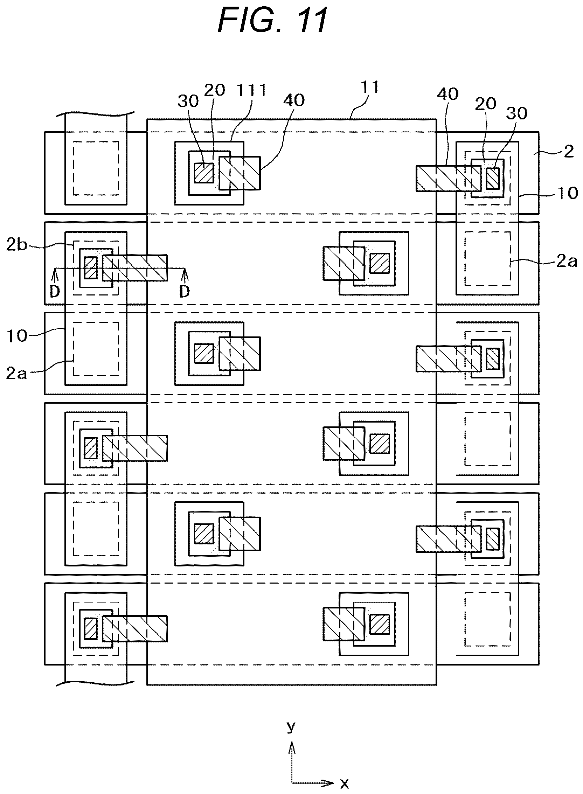

   Fig. 11 is a plan view illustrating a method for connecting the temperature detection structure and the Printed Circuit Board (PCB board) according to Embodiment 2.
[Fig. 12]

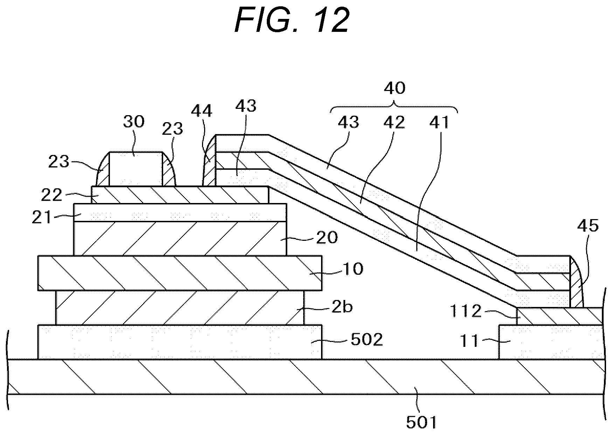

   Fig. 12 is a cross-sectional view taken along D-D in Fig. 11.
[Fig. 13]

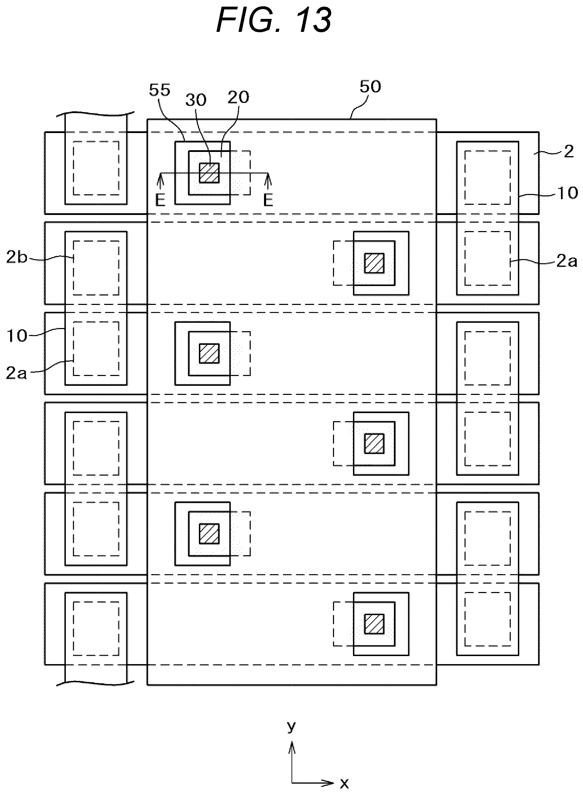

   Fig. 13 is a plan view according to Embodiment 3.
[Fig. 14]

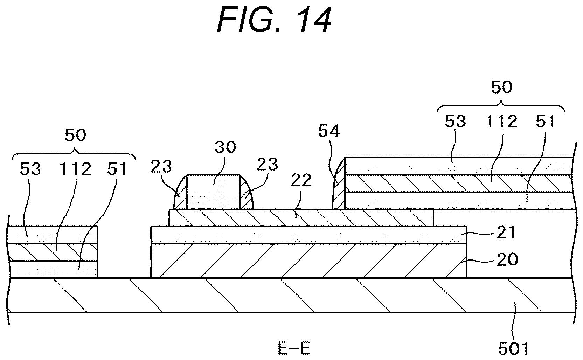

   Fig. 14 is a cross-sectional view taken along E-E in Fig. 13.
[Fig. 15]

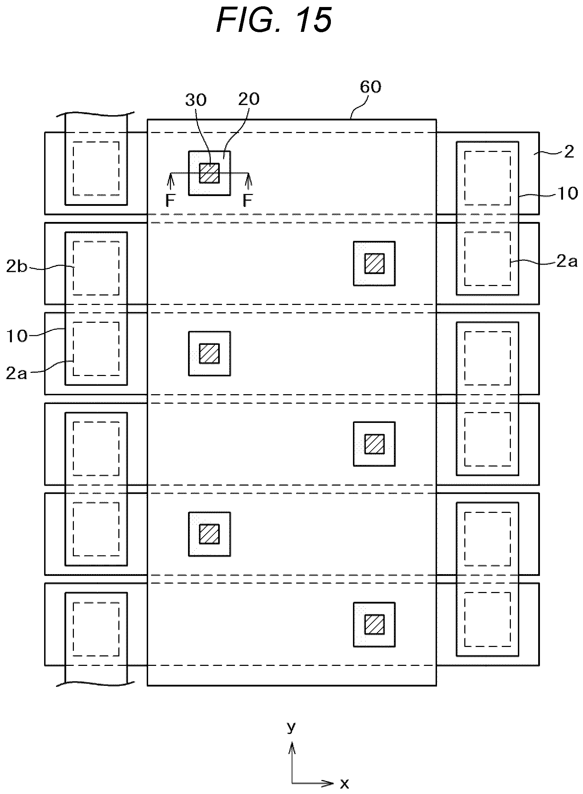

   Fig. 15 is a plan view according to Embodiment 4.
[Fig. 16]

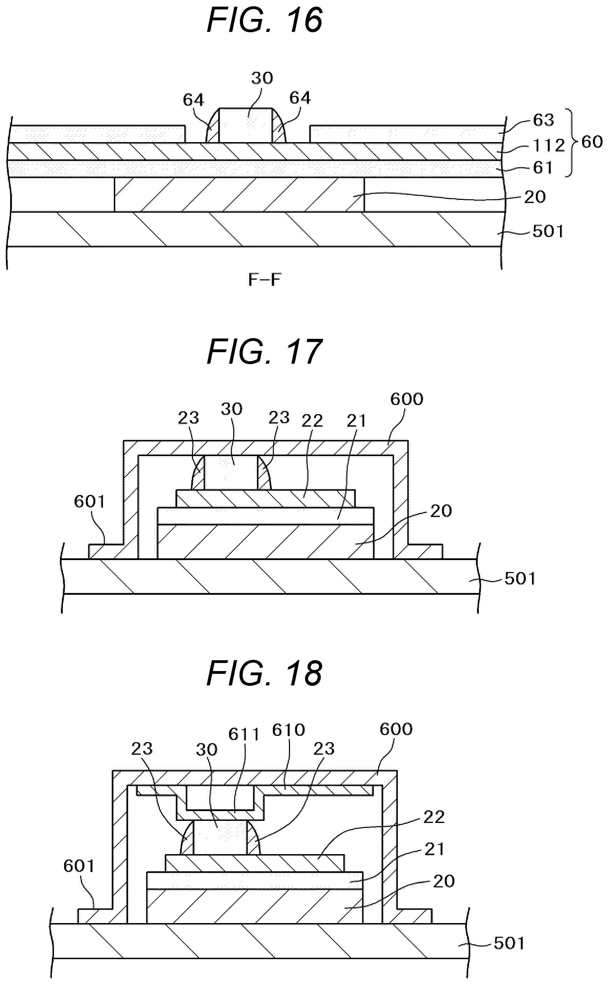

   Fig. 16 is a cross-sectional view taken along F-F in Fig. 15.
[Fig. 17]
   Fig. 17 is a cross-sectional view illustrating a state where a temperature measurement element container covers a temperature measurement element.
[Fig. 18]
   Fig. 18 is a cross-sectional view illustrating a state where the heat transfer member is disposed between the temperature detection element and the temperature detection element container.

### Description of Embodiments

Hereinafter, the contents of the present invention will be described in detail with reference to embodiments.

### Embodiment 1

Fig. 1 is an exploded perspective view of a battery pack according to Embodiment 1. As illustrated in Fig. 1, the battery pack 1 has a structure in which multiple unit cells 2 are fixed by a pair of end plates 4 and a pair of side plates 5. The unit cell 2 is, for example, a rectangular secondary battery such as a lithium-ion secondary battery.

The rectangular unit cell 2 has a rectangular parallelepiped shape including an upper surface and a lower surface, and including a pair of flat surfaces with large areas and a pair of side surfaces with small areas. Although, as for the size of the unit cell 2, for example, the long diameter is 12 cm, the short diameter is 1.2 cm, and the height is 6.5 cm, these are merely examples, and the unit cells 2 may have various sizes. The unit cells 2 are aligned in a row such that flat surfaces having large areas face each other, and holders 3 are interposed between the unit cells 2, in front of the unit cell 2 at the head of the row, and at the back of the unit cell 2 at the end of the row.

A housing of the unit cell 2 includes a container 500 and a lid 501. In the container 500, a power generation element that is a main part of the battery, and includes a charge/discharge body immersed in an electrolyte is housed. An electrolyte injection hole 503 is formed in the lid 501.

The unit cells 2 each include a positive electrode 2a and a negative electrode 2b on the upper side and all have the same size, shape, and structure. The adjacent unit cells 2 are aligned such that the positive electrode 2a and the negative electrode 2b face each other, in other words, front and rear flat surfaces are alternately reversed. The positive electrode 2a is made of, for example, an aluminum-based metal such as aluminum or an aluminum alloy, and the negative electrode 2b is made of, for example, a copper-based metal such as copper or a copper alloy. For example, a lid made of a metal is used for the lid 501. The lid 501 is, for example, the lid containing an iron-based metal or an aluminum-based metal. The metal is preferable in terms of heat transfer of heat inside the battery to the outside.

The end plates 4 are disposed in front of the holder 3 at the head of the row and at the back of the holder 3 at the end of the row. The pair of end plates 4 are made of a metal material and have a substantially rectangular shape, and opening parts 4a through which bolts 6 are inserted are provided at four corner parts. The pair of side plates 5 are disposed on the sides of the unit cells 2 disposed in a row. Each side plate 5 is a rectangular frame body that includes span parts that are provided spaced intervals apart vertically, and connecting parts that connect these span parts. At each corner part of the frame body, an opening part 5a is formed to meet the opening part 4a of the end plate 4.

The battery pack 1 is formed by arranging the end plate 4 at the head side of the row and the end plate 4 at the back side of the row inside the connecting parts in front and at the back of each side plate 5, inserting the bolts 6 into the opening parts 5a of the side plates 5 and the opening parts 4a of the end plates 4, and fixing the bolts 6 by fastening. The bolts 6 are screwed into screw holes (not illustrated) formed in the holder 3 or nuts (not illustrated) are disposed on the back surface sides of the end plates 4 for fastening. Fixing with rivets may be used instead of fastening with the bolts 6.

An insulation cover 7 is disposed on the upper side of each unit cell 2 so as to surround the positive electrodes 2a and the negative electrodes 2b of the unit cells 2 aligned in a row. The positive electrodes 2a and the negative electrodes 2b of the adjacent unit cells 2 (an example of an aspect of the first unit cell and the second unit cell) are connected by bus bars 10. All the unit cells 2 are connected in series by the bus bars 10. An end bus bar 8 is connected to a positive electrode 2a1 of the unit cell 2 at the head of the row and a negative electrode 2b1 of the unit cell 2 at the end of the row. The bus bar 10 or the end bus bar 8, and the positive electrode 2a, and the negative electrode 2b are bonded by welding such as laser welding and ultrasonic welding. A structure formed by connection with screw fastening instead of welding may be used.

The bus bars 10 all have the same shape and structure. The end bus bar 8 has a mounting surface connected to one of the positive electrode 2a and the negative electrode 2b of the unit cell 2, and a through hole for screw fastening is provided at an end part on the opposite side of the mounting surface. The bus bars 10 having various shapes are proposed to deal with stresses against external forces, stresses against thermal expansion, or the like, yet have the most basic shape, that is, a flat plate in Fig. 1 for the sake of simplicity. In this regard, the present invention can be also applied to bus bars of other shapes.

Fig. 2 is a plan view according to Embodiment 1. In Fig. 2, the battery pack 1 is a combination of the six unit cells 2. Note that, although the battery pack 1 is a combination of the 12 unit cells 2 in Fig. 1, the battery pack 1 is a combination of the six unit cells 2 in Fig. 2 so as not to make the figure complicated. Each unit cell 2 is connected by the bus bar 10 in Fig. 2. The anode of each unit cell 2 is connected with the cathode of the unit cell 2 adjacent in the y direction by the bus bar 10.

As an example of the insulation layer including the first wiring, a Printed Circuit Board (PCB board) 11 on which a circuit for a Battery Management System (BMS) has been mounted is disposed between the bus bar 10 and the bus bar 10 so as to cross each unit cell 2 over the y direction.

The Printed Circuit Board (PCB board) 11 disposed across the unit cells 2 is disposed such that the Printed Circuit Board (PCB board) 11 overlaps the plurality of unit cells 2 in a direction in which the Printed Circuit Board (PCB board) 11 overlaps the unit cells 2. The Printed Circuit Board (PCB board) 11 employs a configuration where a circuit is formed on a board formed of, for example, glass epoxy. In Fig. 2, the circuit on the Printed Circuit Board (PCB board) 11 is omitted. An important role of the BSM is to control a charge current and a discharge current in each unit cell and increase an operational life of the battery. A temperature plays an important role for the operational life or safety of the unit cell 2. For the operational life or the safety, accurate temperature measurement of the unit cell 2 is important.

In Embodiment 1, holes 111 are formed in the Printed Circuit Board (PCB board) 11, and a temperature detection structure including a temperature sensor 30 as an example of a temperature detection element and a heat transfer member 20 is directly disposed in this hole 111 and on the lid 501 of the unit cell 2. A thermal resistance and a heat capacity from the lid to the temperature sensor are reduced to enable quick temperature measurement. In Fig. 2, the temperature detection structure is installed on the lid 501 in advance, and the Printed Circuit Board (PCB board) 11 is disposed on the lid 501 such that the temperature detection structure is fitted in the hole 111.

The temperature detection structure bonded to the lid 501 is disposed at a place slightly shifted from the center of the lid 501 toward the x direction to avoid the electrolyte injection hole 503. Positions differ in the alternate x directions because the positive electrode 2a and the negative electrode 2b of the unit cells 2 adjacent in the y direction are disposed reversely. In this regard, the positions of the temperature detection structures or the positions of the holes 111 of the Printed Circuit Board (PCB board) 11 may be any positions on the lid 501 as needed.

Fig. 3 is a cross-sectional view taken along A-A in Fig. 2, and is a cross-sectional view of the temperature detection structure according to Embodiment 1. In Fig. 3, the heat transfer member 20 is disposed on the lid 501 of the unit cell 2. The heat transfer member 20 plays a role of efficiently transferring the temperature of the unit cell 2 to the temperature sensor 30. As the material of the heat transfer member 20, a metal is the most suitable, and aluminum, copper, gold, silver, nickel, iron, or an alloy thereof can be used therefor. The heat transfer member 20 has the flat surface of 10 mm × 10 mm and the plate thickness of 1 to 3 mm. If the plate thickness of the metal is approximately 1 to 3 mm, the heat transfer member 20 can be bonded to the lid 501 of the unit cell 2 by laser welding or the like.

As the other heat transfer member 20, a ceramic substrate formed of alumina or the like may be used although the ceramic substrate has an inferior heat transfer effect compared to that of the metal. While a thermal conductivity of copper is 398 W/mk, a thermal conductivity coefficient of alumina is 20 W/mk. If the wiring can be directly formed on the ceramic substrate, an insulation layer 21 to be described next can be omitted.

In Fig. 3, the insulation layer 21 on which a first detection circuit 22 has been formed is disposed as an example of the first wiring on the heat transfer member 20. The insulation layer 21 can be formed of, for example, polyimide. The polyimide is a material used for a flexible printed wiring board, and has an excellent mechanical strength and heat resistance. When a material having excellent heat transfer characteristics needs to be used for the insulation layer 21, for example, a heat radiation sheet can be used. For example, 6550H that is sold by 3M company and is an acrylic resin has a thermal conductivity of approximately 3 W/mk and a volume resistivity of approximately 8 x 1011, and consequently can be used for the configuration according to the present embodiment.

In Fig. 3, a solder 23 is formed at a terminal of the first detection circuit 22, and the terminal of the first detection circuit 22 is connected with a thermistor as the temperature sensor 30 via this solder 23. The temperature sensor 30 is not limited to the thermistor, and a temperature measurement resistor such as platinum may be used. As illustrated in Fig. 3, each layer from the thermistor 30 to the lid 501 of the unit cell 2 is in close contact with each other, and a material having the excellent thermal conductivity is used as each material, so that it is possible to suppress both of a thermal resistance and a heat capacity at minimum. Accordingly, it is possible to quickly and accurately measure the temperature.

One of the features of the present invention is formed with the metal or the like. The heat transfer member 20 having a high thermal conductivity is disposed in close contact with the lid 501 of the unit cell 2. The lid 501 of the unit cell 2 is formed of, for example, aluminum, and has a plate thickness of approximately 1 mm. On the other hand, the plate thickness of the heat transfer member 20 is approximately 1 mm, so that both of the heat transfer member 20 and the lid 501 can be laser-welded as illustrated in Fig. 4. Accordingly, the thermal conductivities of the lid 501 and the heat transfer member 20 are very high.

On the other hand, the heat transfer member 20 can be adhered to the lid 501 using a high thermal conductive adhesive 201. There is also reported the commercially available high thermal conductive adhesive 201 whose thermal conductivity is 140 W/mk. By using the high thermal conductive adhesive 201, it is also possible to adhere the heat transfer member 20 formed of not only a metal, but also a ceramic such as alumina.

The high thermal conductive adhesive 201 is formed of, for example, an acrylic resin or the like, and needs to be thermally cured at approximately 170°C after application. Although the heat resistance of a battery main body is 60°C to 90°C, there is no problem of the heat resistance if the heat transfer member 20 is disposed in the state of the lid 501 before the lid is put on the unit cell 2.

Fig. 6 is a cross-sectional view illustrating a state where the insulation layer 21 on which the first detection circuit 22 has been formed is adhered using the high thermal conductive adhesive 201. As described above, it is possible to maintain a high thermal conductivity by using the high thermal conductive adhesive 201. In Fig. 6, the thickness of the insulation layer 21 is, for example, approximately 30 micrometers, and the thickness of the high thermal conductive adhesive 201 is, for example, approximately 10 to 30 micrometers.

Referring back to Fig. 3, the first detection circuit 22 and the thermistor 30 are connected with the solder 23. The solder 23 has an excellent thermal conductivity. On the other hand, use of the solder 23 containing lead tends to be banned because the lead is environmentally harmful. In this case, the lead-free solder 23 for which an alloy of tin, silver, copper, or the like has been used can be used. Note that, in a case where the solder 23 cannot be used, it is possible to connect the thermistor 30 and the first detection circuit 22 by using a conductive high thermal conductive adhesive while keeping a low thermal resistance.

The configurations in Figs. 2 and 3 are configurations for achieving a low thermal resistance between the lid 501 of the unit cell 2 and the thermistor 30. The signal of the thermistor 30 detected by the first detection circuit 22 is subjected to signal processing by a second detection circuit 112 for a Battery Management System (BMS) disposed on the Printed Circuit Board (PCB board) 11 to form a control signal. To form the control signal, the first detection circuit 22 and the second detection circuit 112 need to be connected.

In Embodiment 1, as illustrated in Fig. 7, the first detection circuit 22 and the second detection circuit 112 are connected using a flexible printed wiring board 40. By using the flexible printed wiring board 40, it is possible to achieve compact connection. Note that detailed circuits of the Printed Circuit Board (PCB board) 11 are omitted in Fig. 7.

Fig. 8 is a cross-sectional view taken along B-B in Fig. 7. In Fig. 8, the flexible printed wiring board 40 includes a first insulation layer 41, a wiring layer 42, and a second insulation layer 43. The flexible printed wiring board 40 is connected with the first detection circuit 22 on the temperature detection structure side with a solder 44, and is connected with the second detection circuit 112 on the Printed Circuit Board (PCB board) 11 side with a solder 45. A lead-free solder may be used as needed, or a conductive resin may be used for conduction.

Fixing of the heat transfer member 20 and a measurement target member (here, the lid 501) can be fixed with an adhesive. Alternatively, the heat transfer member 20 and the measurement target member can be also fixed by welding. It is possible to improve a thermal conductivity by welding metal parts.

### Embodiment 2

By measuring temperatures from a plurality of portions in the unit cell 2, it is possible to perform more detailed control. In particular, by measuring the temperatures of the housing (e.g., lid 501) of the unit cell 2 and the bus bar 10 through which the current passes, it is possible to perform effective control. That is, by measuring the temperature of the bus bar 10, it is possible to estimate a sudden change in the temperature inside the battery early due to heat generation at a time of charging and discharging with a large current. On the other hand, by measuring the temperature of the housing part (e.g., lid 501), it is possible to check a real-time cooling state of the unit cell 2.

Consequently, it is possible to achieve a longer operational life of the unit cell 2. Furthermore, it is possible to more accurately estimate the temperature inside the battery even in a low-temperature environment, and obtain a maximum battery output such that the battery operational life is not affected even in the low-temperature environment.

Fig. 9 is a plan view of the battery pack 1 according to Embodiment 2. A difference of Fig. 9 from Fig. 2 is that the temperature detection structure is also disposed on the bus bar 10 in addition to the lid 501 of the unit cell 2. That is, the unit cell 2 includes two temperature measurement portions. The temperature detection structure disposed on the bus bar 10 can estimate a sudden change in the temperature inside the unit cell 2 when a large current flows.

Fig. 10 is a cross-sectional view taken along C-C in Fig. 9, and is a cross-sectional view illustrating the configuration of the temperature detection structure in the bus bar 10. In Fig. 10, the negative electrode 2b is disposed on the lid 501 of the unit cell 2 with an insulating member 502 interposed therebetween. The negative electrode 2b is connected with the power generation element inside the unit cell 2. The bus bar 10 is connected on the negative electrode 2b. As illustrated in Fig. 9, the bus bar 10 is connected with the positive electrode 2a of the unit cell disposed next to the negative electrode 2b.

As an example of the second heat transfer member bonded onto the bus bar, the heat transfer member 20 is connected on the bus bar 10. A method for connecting the heat transfer member 20 to the bus bar is the same as that described with reference to, for example, Figs. 4 and 5. That is, the difference is that, although the heat transfer member 20 is directly connected to the lid 501 of the unit cell 2 in Figs. 3 and 4, the heat transfer member 20 is connected to the bus bar 10 in Fig. 10.

In Fig. 10, examples of a structure of a second insulation layer including a second wiring bonded onto the heat transfer member 20 and a second temperature detection element to be further connected therewith are a configuration from the heat transfer member 20 to the thermistor 30. This configuration is the same as that described with reference to Fig. 3. Accordingly, the thermistor 30 can quickly detect a change in the temperature in the bus bar 10, and can quickly estimate a change in the temperature inside the unit cell 2 at a time of charging and discharging with a large current.

In Fig. 10, a signal of the thermistor 30 detected by the first detection circuit 22 is subjected to signal processing by the second detection circuit 112 for the Battery Management System (BMS) disposed on the Printed Circuit Board (PCB board) 11 to form a control signal. To form the control signal, the first detection circuit 22 and the second detection circuit 112 need to be connected.

Fig. 11 is a plan view illustrating this configuration. Differences of Fig. 11 from Fig. 7 in Embodiment 1 include that the temperature detection structure is formed on the bus bar 10 and this temperature detection structure is connected with the Printed Circuit Board (PCB board) 11 with the flexible printed wiring board 40 interposed therebetween. The other components are the same as those in Fig. 7.

Fig. 12 is a cross-sectional view taken along D-D in Fig. 11, and is a cross-sectional view illustrating a state where the temperature detection structure formed on the bus bar 10 and the Printed Circuit Board (PCB board) 11 are connected via the flexible printed wiring board 40. In Fig. 12, the temperature detection structure formed on the bus bar 10 of the unit cell 2 is as described with reference to Fig. 10. Furthermore, the configuration of the flexible printed wiring board 40 for connection and the configuration of the Printed Circuit Board (PCB board) 11 on which the second detection circuit 112 has been formed are the same as those described with reference to Fig. 8 in Embodiment 1.

Differences of Fig. 12 from Fig. 8 include that, although the temperature detection structure is formed on the bus bar 10, and therefore a difference in height between the first detection circuit 22 and the second detection circuit 112 formed on the Printed Circuit Board (PCB board) 11 is large, and a distance between the first detection circuit 22 and the second detection circuit 112 is long, there is no essential difference in structure.

### Embodiment 3

In Embodiment 1 and Embodiment 2, the second detection circuit 112 for the Battery Management System (BMS) is formed on the rigid Printed Circuit Board (PCB board) 11. By contrast with this, in Embodiment 3, a flexible printed wiring board 50 is used instead of the Printed Circuit Board (PCB board) 11. In Fig. 13, the flexible printed wiring board 50 on which a circuit for the Battery Management System (BMS) is mounted has been disposed between the bus bar 10 and the bus bar 10 in the x direction to cross each unit cell 2 over the y direction. As for the flexible printed wiring board 50 disposed across the unit cells 2, the flexible printed wiring board 50 is disposed overlapping the plurality of unit cells 2 in a direction in which the flexible printed wiring board 50 overlaps the unit cells 2.

Furthermore, holes 55 are formed in the flexible printed wiring board 50 and at positions meeting the temperature detection structures. That is, Fig. 13 illustrates a configuration similar to that in Fig. 2 in Embodiment 1 except that the Printed Circuit Board (PCB board) 11 is replaced with the flexible printed wiring board 50.

In this regard, in Fig. 13, the first detection circuit 22 in the temperature detection structure and the second detection circuit 112 mounted on the flexible printed wiring board 50 are directly connected, so that the flexible printed wiring board 40 for connection illustrated in FIG. 7 is unnecessary. Accordingly, the configuration according to Embodiment 2 is simpler.

Fig. 14 is a cross-sectional view taken along E-E in Fig. 13, and a cross-sectional view illustrating a configuration where the first detection circuit 22 of the temperature detection structure and the second detection circuit 112 formed on the flexible printed wiring board 50 on which the circuit for the Battery Management System (BMS) has been mounted are connected. In Fig. 14, the heat transfer member 20 and the first detection circuit 22 extend in a right direction compared to, for example, Figs. 2 and 9 in Embodiment 1. A portion extending in the right direction overlaps the flexible printed wiring board 50, and is connected with the second detection circuit 112 formed on the flexible printed wiring board 50 with a solder 54 at this portion. Accordingly, the flexible printed wiring board 40 for connection is unnecessary.

In Fig. 14, the flexible printed wiring board 50 includes an insulation layer 51, the second detection circuit 112, and an insulation layer 53. The second detection circuit 112 is connected with the first detection circuit 22 formed in the temperature detection structure by the solder 54. In Fig. 14, the thermal resistance between the thermistor 30 and the lid 501 of the housing is the same as those in, for example, Figs. 2 and 7. Accordingly, an effect is the same as that in Embodiment 1.

### Embodiment 4

Fig. 15 is a plan view illustrating Embodiment 4. Also in Embodiment 4, the circuit for the Battery Management System (BMS) is formed on a flexible printed wiring board 60 without using the Printed Circuit Board (PCB board) 11. A difference of Fig. 15 of Embodiment 4 from Fig. 13 of Embodiment 3 includes that a thermistor as the temperature sensor 30 is mounted on the flexible printed wiring board 60. Accordingly, the first detection circuit 22 and the second detection circuit 112 do not need to be connected. Features in Fig. 15 are that, while the thermistor 30 is mounted on the flexible printed wiring board 60, the heat transfer member 20 is disposed under the flexible printed wiring board 60 at a portion at which the thermistor is present, and this heat transfer member 20 and the flexible printed wiring board 60 are adhered at this portion to reduce the thermal resistance.

Fig. 16 is a cross-sectional view taken along F-F in Fig. 15. In Fig. 16, that the heat transfer member 20 is formed of a metal or the like on the lid 501 of the unit cell 2 is the same as that in Embodiment 1 or the like. As an example of the flexible printed wiring board including the first insulation layer and the first circuit, the flexible printed wiring board 60 on which the second detection circuit 112 or the like has been formed is disposed covering the heat transfer member 20 in Fig. 16. The flexible printed wiring board 60 is bonded with the heat transfer member 20, and adhered with a high heat transfer adhesive or the like to a reduce thermal resistance.

The flexible printed wiring board 60 includes an insulation layer 61, the second detection circuit 112, and an insulation layer 63, an opening part is formed in the insulation layer 63 at a portion at which the thermistor 30 is mounted, and the thermistor 30 and the second detection circuit 112 are bonded at this portion with a solder 64. The thermistor 30 is present at a portion at which the heat transfer member 20 has been formed in plan view. By adhering the heat transfer member 20 and the flexible printed wiring board 60 with a high heat transfer adhesive having a large thermal conductivity such as 140 W/mk in thermal conductivity, it is possible to reduce the thermal resistance between the thermistor 30 and the lid 501 of the unit cell 2. Accordingly, it is possible to quickly measure the temperature. Even in a case where polyimide whose thermal conductivity is 0.3 W/mk and relatively small is used as the insulation layer 61 of the flexible printed wiring board 60, the thickness of the polyimide is approximately 30 micrometers, so that, as long as the insulation layer 61 and the heat transfer member 20 are firmly adhered, a thermal resistance does not become high.

### Embodiment 5

Fig. 17 is a cross-sectional view illustrating an example of Embodiment 5. Fig. 17 is a cross-sectional view illustrating a configuration where a detection element container 600 encloses the temperature detection element and thereby accurately measures the temperature. The detection element container 600 in Fig. 17 has a rectangular shape in plan view, and is a box type whose bottom surface is opened as a whole.

In Fig. 17, the configuration of the temperature detection element including the temperature sensor 30, the first detection circuit 22, and the like is the same as the configuration illustrated in Fig. 3 in Embodiment 1. In Fig. 17, a fixed part 601 of the detection element container 600 is connected to the measurement target lid 501 by, for example, welding. In addition to this, for the fixed part 601 of the detection element container 600, a high thermal conductive adhesive may be used, or a configuration that mechanically presses the fixed part 601 against the lid 501 such as "caulking" may be used. In any case, it is sufficient that the fixed part 601 can reduce the thermal resistance between the detection element container 600 and the lid 501.

The detection element container 600 is made of a material such as a metal having an excellent thermal conductivity. For example, aluminum can be used. If there is a situation that it is not desirable to use a metal, for example, ceramic such as alumina having an excellent thermal conductivity may be used. If the detection element container 600 has high heat conduction characteristics, the temperature of the lid 501 is efficiently led to the temperature sensor 30, and it is possible to quickly and accurately measure the temperature of a measurement portion.

That is, in a case of the configuration in Fig. 3 of Embodiment 1, the insulation layer 21 and the first detection circuit 22 are disposed between the temperature sensor 30 and the lid, and therefore a difference from the temperature of the lid 501 is likely to be produced. By contrast with this, in the configuration in Fig. 17, substantially only the detection element container 600 having an excellent thermal conductivity and made of a metal or the like is present between the lid 501 and the temperature sensor 30, so that it is possible to accurately measure the temperature of the lid 501.

Here, assuming that the thermal resistance of the detection element container 600 is low and the temperature of the detection element container 600 is made substantially the same as the temperature of the lid 501, it is possible to assume that the measurement target is the detection element container 600. Then, in the configuration in Fig. 17, the first detection circuit 22 has a measurement target on the opposite side across the temperature sensor 30. Accordingly, it is possible to more accurately measure the temperature of the lid 501.

In Fig. 17, although there is a space between the detection element container 600 and the temperature sensor 30, it is possible to further reduce the thermal resistance, and more accurately detect the temperature by filling a material having an excellent thermal conductivity in this space. Furthermore, it is possible to mechanically protect the temperature detection element by using the detection element container 600. Note that the detection element container 600 in Fig. 17 is an example, and the detection element container 600 employing another configuration can be also used. In this case, there may be also employed a configuration that makes it easy to attach the temperature detection element to the lid 501.

### Embodiment 6

Fig. 18 is a cross-sectional view illustrating Embodiment 6. That the temperature detection element is disposed in the box-type detection element container 600 in Fig. 18 is also the same as that in Fig. 17. Furthermore, that the temperature detection element is the same as the configuration in Fig. 3 of Embodiment 1 is the same as that in Fig. 17. Differences of Fig. 18 from Fig. 17 include that a heat transfer member 610 having excellent heat conduction characteristics is attached to an inner wall on an upper side of the detection element container 600, and a protrusion part 611 formed on this heat transfer member 610 is in contact with the temperature sensor 30.

Roles of the heat transfer member 610 and the protrusion part 611 are to improve thermal contact between the temperature sensor 30 and the detection element container 600. When the detection element container 600 and the temperature sensor 30 are brought into direct contact, thermal contact may not be sufficient. In this case, by using the heat transfer member 610 that is easily fitted to the surface of the temperature sensor 30, it is possible to reduce a thermal resistance between the detection element container 600 and the temperature sensor 30, and more accurately measure the temperature.

In FIG. 18, the heat transfer member 610 has substantially the same shape as the inner wall of the upper surface of the detection element container 600 in a plan view. The shape is made the same to increase the thermal contact between the heat transfer member 610 and the detection element container 600 as much as possible. The protrusion part 611 is formed at a portion at which the heat transfer member 610 contacts the temperature sensor 30. The protrusion part 611 is formed at this portion to make it easy to reduce the thermal contact between the heat transfer member 610 and the temperature sensor.

The material of the heat transfer member 610 is not particularly limited as long as the material has a high thermal conductivity. Metals are the easiest to use. By, for example, providing springiness at a portion of the protrusion part 611, the metals can further improve the thermal contact between the temperature sensor 30 and the heat transfer member 610. Note that, by using a high thermal conductive adhesive between the protrusion part 611 and the temperature sensor 30, it is possible to further improve the thermal contact.

The same material as that of the detection element container 600 can be used as the heat transfer member 610. As a metal material of the heat transfer member 610, for example, aluminum having an excellent thermal conductivity can be also used. Other components and functions in Fig. 18 are the same as the components in Fig. 17.

Note that, in the embodiment illustrated in Figs. 17 and 18, a measurement target part may alternatively be in contact with the temperature sensor 30 while facing the detection element container 600 on the opposite side of the lid 501. In this case, a board on which the temperature sensor 30 is installed may be disposed on the lid 501. A circuit or the like is not located between a sensor and a non-measurement target battery, so that it is possible to perform accurate measurement. Fixing with the measurement target member can be fixed by adhesion, welding, and, in addition, pressing. A pressing structure that presses this container by known means such as a metal spring or a resin spring may be provided as a structure that fixes the container and the measurement target part. Use of the container increases the degree of freedom of fixing. Furthermore, there is provided a heat transfer member that conducts heat between the temperature sensor and a container wall surface. It is possible to improve temperature measurement accuracy.

### Reference Signs List

- 1: Battery pack
- 2: Unit cell
- 2a: Positive electrode
- 2b: Negative electrode
- 3: Holder
- 4: End plate
- 4a: Opening part
- 5: Side plate
- 5b: Opening part
- 6: Bolt
- 7: Insulation cover
- 8: End bus bar
- 10: Bus bar
- 11: Printed circuit board (PCB board)
- 20: Heat transfer member
- 21: Insulation layer
- 22: First detection circuit
- 23: Solder
- 30: Temperature measurement element (thermistor)
- 40: Flexible printed wiring board
- 41: Insulation layer
- 42: Second detection circuit
- 43: Insulation layer
- 44: Solder
- 45: Solder
- 50: Flexible printed wiring board
- 51: Insulation layer
- 52: Second detection circuit
- 53: Insulation layer
- 54: Solder
- 55: Hole of flexible printed wiring board
- 60: Flexible printed wiring board
- 61: Insulation layer
- 62: Detection circuit
- 63: Insulation layer
- 64: Solder
- 111: Hole of PCB
- 112: Second detection circuit
- 201: High thermal conductive adhesive
- 500: Container
- 501: Lid
- 502: Insulation member
- 600: Detection element container
- 601: Fixed part
- 610: Heat transfer member
- 611: Protrusion part

## Claims

1. A battery pack in which a plurality of unit cells each containing a power generation element in a container and sealed with a lid made of a metal are aligned, wherein
a heat transfer member is bonded to the lid, an insulation layer including a first wiring is bonded onto the heat transfer member, and a temperature sensor is connected to the first wiring.

2. The battery pack according to claim 1, wherein the heat transfer member is formed of a metal.

3. The battery pack according to claim 1, wherein the heat transfer member is bonded to the lid by laser welding.

4. The battery pack according to claim 1, wherein the heat transfer member is formed of a metal or ceramic, and is adhered to the lid with an adhesive.

5. The battery pack according to claim 1, wherein the insulation layer is adhered to the heat transfer member with an adhesive.

6. The battery pack according to claim 1, wherein the temperature sensor is connected with the first wiring with a solder.

7. The battery pack according to claim 1, wherein a printed circuit board is disposed across the plurality of unit cells, and the first wiring is connected with the printed circuit board by a conductive member.

8. The battery pack according to claim 1, further comprising a bus bar that connects a positive electrode of a first unit cell and a negative electrode of a second unit cell, wherein
a second heat transfer member is bonded to the bus bar, a second insulation layer including a second wiring is bonded onto the second heat transfer member, and a second temperature detection sensor is connected to the second wiring.

9. The battery pack according to claim 8, wherein the second heat transfer member is bonded to the bus bar by laser welding.

10. The battery pack according to claim 8, wherein a printed circuit board is disposed across the plurality of unit cells, and the second wiring is connected with the printed circuit board with a flexible printed wiring board interposed therebetween.

11. A battery pack in which a plurality of unit cells each containing a power generation element in a container and sealed with a lid made of a metal are aligned, wherein
a heat transfer member is bonded to the lid, an insulation layer including a first wiring is bonded onto the heat transfer member, and a temperature sensor is connected to the first wiring, and
the first wiring is connected with a flexible printed wiring board.

12. The battery pack according to claim 11, wherein the flexible printed wiring board is disposed across the plurality of unit cells.

13. The battery pack according to claim 11, wherein the first wiring and the flexible printed wiring board are connected with a solder.

14. The battery pack according to claim 11, wherein the flexible printed wiring board includes a hole, and the temperature sensor is present in the hole in plan view.

15. A battery pack in which a plurality of unit cells each containing a power generation element in a container and sealed with a lid made of a metal are aligned, wherein
a heat transfer member is bonded to the lid, a flexible printed wiring board including a first insulation layer and a first circuit is bonded onto the heat transfer member, and a temperature sensor is connected with the first circuit at a position at which the temperature sensor overlaps the heat transfer member in plan view.

16. The battery pack according to claim 15, wherein the heat transfer member is formed of a metal.

17. The battery pack according to claim 15, wherein the flexible printed wiring board is bonded with the heat transfer member with an adhesive.

18. The battery pack according to claim 15, wherein the temperature sensor is connected with the first circuit with a solder.

19. The battery pack according to claim 15, wherein the flexible printed wiring board is disposed across the plurality of unit cells.
